# EUROPÄISCHE PATENTANMELDUNG

(11) **EP 4 016 782 A1**
(43) Veröffentlichungstag der Anmeldung: **22.06.2022**
(21) Anmeldenummer: 20214324.4
(22) Anmeldetag: 15.12.2020
(51) Int. Cl.: H02J 7/00

(54) **MEHRPLATZLADEGERÄT UND AKKUPACK-MEHRPLATZLADEGERÄT-SET**

(71) Anmelder: Andreas Stihl AG & Co. KG, 71336 Waiblingen (DE)
(72) Erfinder: Fuchs, Michael, 71332 Waiblingen (DE); Mattheis, Leonard, 71336 Waiblingen (DE); Lang, Benedikt, 70374 Stuttgart (DE)
(74) Vertreter: Patentanwälte Ruff, Wilhelm, Beier, Dauster & Partner mbB

(57) **Zusammenfassung**

2.1. Die Erfindung bezieht sich auf ein Mehrplatzladegerät mit einer Mehrzahl von Ladeplätzen (L₁, L₂, ...), die jeweils zum entnehmbaren Aufnehmen und elektrischen Laden einer wiederaufladbaren Batterieeinheit eingerichtet sind, einer Anzeigebefehlseinheit (1) und einer nutzerbetätigbaren Befehlsaktivierungseinheit (2), die zur Aktivierung der Anzeigebefehlseinheit (1) eingerichtet ist, sowie auf ein entsprechendes Batterie-Mehrplatzladegerät-Set.
2.2. Erfindungsgemäß ist die Anzeigebefehlseinheit (1) zum Senden eines Ladezustandsanzeigebefehls (B_{A}) eingerichtet, der die am jeweiligen Ladeplatz (L₁, L₂, ...) aufgenommene Batterieeinheit zum Anzeigen ihres Ladezustands an einer batterieseitigen Anzeigeeinheit befehligt.
2.3. Verwendung z.B. zum Aufladen von Akkupacks für elektrische Garten- und Forstbearbeitungsgeräte.

## Beschreibung

Die Erfindung bezieht sich auf ein Mehrplatzladegerät mit einer Mehrzahl von Ladeplätzen, die jeweils zum entnehmbaren Aufnehmen und elektrischen Laden einer wiederaufladbaren Batterieeinheit eingerichtet sind, einer Anzeigebefehlseinheit und einer nutzerbetätigbaren Befehlsaktivierungseinheit, die zur Aktivierung der Anzeigebefehlseinheit eingerichtet ist, sowie auf ein entsprechendes Batterie-Mehrplatzladegerät-Set.

Mit dem Begriff Mehrplatzladegerät ist hierbei vorliegend ein Ladegerät gemeint, das über mehrere Ladeplätze verfügt, an denen eine jeweilige wiederaufladbare Batterieeinheit zwecks elektrischem Aufladen derselben entnehmbar aufgenommen werden kann. Der Begriff Batterieeinheit umfasst vorliegend einen elektrischen Energiespeicher jedweden herkömmlichen Batterietyps, insbesondere vom Typ sogenannter Akkupacks, wie sie zur elektrischen Energieversorgung beispielsweise von elektrisch betriebenen Garten- und Forstbearbeitungsgeräten sowie elektrisch betriebenen Heimwerkergeräten bzw. Handwerkzeuggeräten vielfach zum Einsatz kommen. Als Batterie-Mehrplatzladegerät-Set ist vorliegend die Gesamtheit aus Mehrplatzladegerät und einer oder mehreren wiederaufladbaren Batterieeinheiten zu verstehen, die durch dieses Mehrplatzladegerät elektrisch aufgeladen werden können.

Die Befehlsaktivierungseinheit kann durch den Benutzer betätigt werden, d.h. sie ist eine nutzerbetätigte Befehlsaktivierungseinheit. Ihre Betätigung löst die Aktivierung der Anzeigebefehlseinheit aus, die dann eine entsprechende, vorgegebene Anzeigebefehlsfunktion bzw. Anzeigebefehlsaktion ausführt. Die Befehlsaktivierungseinheit kann beispielsweise eine nutzerbetätigbare Bedientaste oder ein anderes herkömmliches, nutzerbetätigbares Bedienelement sein.

Die Offenlegungsschrift US 2017/0063114 A1 offenbart ein derartiges Mehrplatzladegerät und ein entsprechendes Batterie-Mehrplatzladegerät-Set, wobei das dortige Mehrplatzladegerät ein werkzeugkofferartiges Gehäuse aufweist, in dem die Ladeplätze angeordnet sind. Außerdem sind in dem Gehäuse eine geräteseitige Anzeigeeinheit mit je einem Anzeigeteil pro Ladeplatz zum Anzeigen des Ladezustands einer am Ladeplatz angeordneten Batterieeinheit und eine Steuereinheit untergebracht, die zur Steuerung der Batterieladevorgänge und zur Steuerung der Ladezustandsanzeige an der geräteseitigen Anzeigeeinheit dient. Über eine nutzerbetätigbare Drucktaste kann der Benutzer das Mehrplatzladegerät zwischen einem Ladebetriebsmodus zur Durchführung von Batterieladevorgängen und einem Anzeigemodus umschalten, in dem etwaige Batterieladevorgänge unterbrochen und die Batterieladezustände erfasst und angezeigt werden.

Die Patentschrift US 7.750.598 B2 offenbart ein Mehrplatzladegerät mit Ladeplätzen, an denen jeweils eine variable Anzahl von Batterieeinheiten aufgenommen werden kann, und mit einer geräteseitigen Anzeigeeinheit, die je ein Anzeigeteil pro Ladeplatz aufweist, wobei am jeweiligen Anzeigeteil sowohl die Anzahl als auch der Typ der am zugehörigen Ladeplatz aufgenommenen Batterieeinheiten angezeigt werden kann.

Der Erfindung liegt als technisches Problem die Bereitstellung eines Mehrplatzladegeräts der eingangs genannten Art, das sich mit vergleichsweise geringem Aufwand realisieren lässt und zumindest für Batterieeinheiten bestimmten Typs in einfacher Weise eine Anzeige ihres Ladezustands ermöglicht, wenn sie am jeweiligen Ladeplatz aufgenommen sind, sowie eines entsprechenden Batterie-Mehrplatzladegerät-Sets zugrunde.

Die Erfindung löst dieses Problem durch die Bereitstellung eines Mehrplatzladegeräts mit den Merkmalen des Anspruchs 1 und eines Batterie-Mehrplatzladegerät-Sets mit den Merkmalen des Anspruchs 9. Vorteilhafte Weiterbildungen der Erfindung, die zur Lösung dieses und weiterer Probleme beitragen, sind in den Unteransprüchen angegeben, deren Inhalt einschließlich sämtlicher sich durch die Anspruchsrückbezüge ergebender Merkmalskombinationen hiermit vollumfänglich durch Verweis zum Inhalt der Beschreibung gemacht wird.

Beim erfindungsgemäßen Mehrplatzladegerät ist die Anzeigebefehlseinheit zum Senden eines Ladezustandsanzeigebefehls eingerichtet, der die am jeweiligen Ladeplatz aufgenommene Batterieeinheit zum Anzeigen ihres Ladezustands an einer batterieseitigen Anzeigeeinheit befehligt. Die von der Anzeigebefehlseinheit bei Aktivierung ausgeführte Anzeigebefehlsaktion umfasst somit das Senden des Ladezustandsanzeigebefehls, durch den eine oder mehrere, am jeweiligen Ladeplatz aufgenommene Batterieeinheiten veranlasst werden, ihren Ladezustand an ihrer batterieseitigen Anzeigeeinheit anzuzeigen.

Der Ladezustandsanzeigebefehl kann beispielsweise als ein drahtgebundenes elektrisches Befehlssignal oder als ein drahtlos übertragenes Befehlssignal gesendet werden, wobei jede beliebige herkömmliche Art von Befehlssignaltypen und zugehörigen Typen von Befehlssignalübertragung verwendbar sind. Je nach Bedarf kann der gesendete Ladezustandsanzeigebefehl insbesondere ein einmalig kurz gesendetes Befehlssignal oder ein über eine längere Zeitdauer kontinuierlich oder wiederholt gesendetes Befehlssignal sein, und die Anzeige des Ladezustands an der batterieseitigen Anzeigeeinheit kann je nach Bedarf insbesondere so realisiert sein, dass sie unabhängig von der Dauer des Befehlssignals über eine vorgegebene Zeitdauer hinweg bestehen bleibt oder im Wesentlichen für die Dauer des Befehlssignals bestehen bleibt.

Durch diese Maßnahme ist das Mehrplatzladegerät in der Lage, dem Benutzer in einfacher Weise eine Möglichkeit zu bieten, den Ladezustand der am Ladeplatz aufgenommenen Batterieeinheit an der batterieseitigen Anzeigeeinheit anzeigen zu lassen, wenn die Batterieeinheit über eine solche Anzeigeeinheit verfügt. Dazu ist es dementsprechend nicht erforderlich, das Mehrplatzladegerät selbst mit einer geräteseitigen Anzeigeeinheit auszurüsten, die in der Lage ist, die Ladezustände von an den Ladeplätzen aufgenommenen Batterieeinheiten anzuzeigen. Stattdessen ermöglicht es das Mehrplatzladegerät in einer vorteilhaften Weise, an den Batterieeinheiten vorhandene Anzeigeeinheiten dafür zu nutzen, dort die Batterieladezustände anzuzeigen. Zusätzlicher Aufwand für die Implementierung derartiger Ladezustandsanzeigefunktionen in das Mehrplatzladegerät selbst kann dadurch eingespart werden. Der Ladezustand kann dabei in an sich herkömmlicher Weise bestimmt werden, z.B. als ein Batteriespannungszustand durch eine Erfassung der an den Anschlüssen der Batterieeinheit abgreifbaren Batteriespannung oder durch eine Erfassung der in der Batterieeinheit eingespeicherten elektrischen Ladung.

Dabei kann der Benutzer über eine einzige Betätigung der Befehlsaktivierungseinheit den Ladezustand aller an den Ladeplätzen aufgenommenen Batterieeinheiten an deren batterieseitiger Anzeigeeinheit anzeigen lassen. Somit kann der Benutzer durch die entsprechende Anzeigeanforderung über die Befehlsaktivierungseinheit sehr einfach erkennen, ob und an welchem Ladeplatz jeweils eine Batterieeinheit aufgenommen ist und welchen Ladezustand diese aktuell hat. Dieser Abruf der Ladezustände ist dabei vorzugsweise auch dann möglich, wenn sich das Mehrplatzladegerät in einem Standby- bzw. Ruhemodus befindet, falls es über einen solchen verfügt.

In einer Weiterbildung der Erfindung ist das Mehrplatzladegerät dafür eingerichtet, in einem aktiven Ladebetriebsmodus einen laufenden Batterieladevorgang beizubehalten, wenn die Anzeigebefehlseinheit den Ladezustandsanzeigebefehl sendet. Dies hat den Vorteil, dass der Batterieladevorgang nicht unterbrochen wird, wenn der Benutzer das Anzeigen der Ladezustände der an Ladeplätzen aufgenommenen Batterieeinheiten anfordert. In alternativen Ausführungen ist eine derartige Unterbrechung des jeweiligen Batterieladevorgangs in diesem Fall vorgesehen, wenn dies für entsprechende Anwendungen zweckmäßig ist.

In einer Weiterbildung der Erfindung beinhaltet das Mehrplatzladegerät eine Batteriezustandserkennungseinheit und eine geräteseitige Anzeigeeinheit mit je einem Anzeigeteil pro Ladeplatz. Die Batteriezustandserkennungseinheit ist zur Gewinnung einer binären Ladbarkeitsinformation eingerichtet, die angibt, ob am jeweiligen Ladeplatz eine ladbare Batterieeinheit aufgenommen ist. Der jeweilige Anzeigeteil ist dafür eingerichtet, die Ladbarkeitsinformation von der Batteriezustandserkennungseinheit zu empfangen und diese anzuzeigen. Die Batteriezustandserkennungseinheit ist folglich in der Lage, zu erkennen, ob sich am jeweiligen Ladeplatz eine Batterieeinheit befindet und ob diese geladen werden kann. Hierbei ist unter dem Begriff ladbare Batterieeinheit vorliegend zu verstehen, dass es sich um eine fehlerfreie, für die Verwendung zum Laden im Mehrplatzladegerät geeignete Batterieeinheit handelt.

Diese Maßnahme hat den Vorteil, dass das Mehrplatzladegerät über eine geräteseitige Anzeigeeinheit verfügt, die sich mit relativ geringem Aufwand so ausführen lässt, dass sie die genannte, relativ einfache Anzeigefunktionalität erfüllt, ohne darüber hinaus zwingend weitere, komplexere Anzeigefunktionalitäten haben zu müssen. Das Anzeigen der binären Information über das Vorhandensein einer ladbaren Batterieeinheit am betreffenden Ladeplatz erfordert nur relativ wenig Implementierungsaufwand für die geräteseitige Anzeigeeinheit. Durch das Anzeigen dieser Information kann der Benutzer in einfacher Weise darüber informiert werden, an welchen Ladeplätzen sich momentan Batterieeinheiten befinden, die ladbar sind, d.h. die prinzipiell geladen werden können, was den Fall einschließt, dass die Batterieeinheit bereits vollständig geladen ist. Alternativ kann die geräteseitige Anzeigeeinheit zur Erfüllung komplexerer Anzeigefunktionen ausgelegt sein. In anderen alternativen Ausführungen bleibt das Mehrplatzladegerät ohne eine derart ausgeführte geräteseitige Anzeigeeinheit, was für entsprechende Anwendungen entbehrlich sein kann.

In einer Ausgestaltung der Erfindung weist das Mehrplatzladegerät eine Fehlererkennungseinheit auf, die zur Gewinnung einer Fehlerinformation eingerichtet ist, die eine geräteseitige Fehlfunktion und/oder eine Fehlfunktion einer an einem der Ladeplätze aufgenommenen Batterieeinheit angibt. Die geräteseitige Anzeigeeinheit ist zum Empfangen und Anzeigen dieser Fehlerinformation eingerichtet. Dadurch lässt sich die geräteseitige Anzeigeeinheit vorteilhaft zusätzlich zur entsprechenden Fehleranzeige nutzen. In alternativen Ausführungen bleibt die geräteseitige Anzeigeeinheit ohne eine derartige Fehleranzeigefunktionalität.

In einer Weiterbildung der Erfindung ist das Mehrplatzladegerät zur sequentiellen Durchführung von Batterieladevorgängen an jeweils einem der mehreren Ladeplätze eingerichtet. Bei dieser Ausführung lädt folglich das Mehrplatzladegerät zu jedem Zeitpunkt höchstens eine von gegebenenfalls mehreren, an entsprechenden Ladeplätzen aufgenommenen, aufzuladenden Batterieeinheiten. Erst wenn der Batterieladevorgang für die jeweilige Batterieeinheit beendet ist, beispielsweise weil diese Batterieeinheit ihren vollen Ladezustand erreicht hat oder von ihrem Ladeplatz entnommen wurde, aktiviert das Mehrplatzladegerät bei Bedarf einen neuen Batterieladevorgang für eine andere Batterieeinheit an einem der Ladeplätze. Dieser sequentielle Ladebetrieb kann die Realisierung einer zugehörigen Ladesteuerung des Mehrplatzladegeräts vereinfachen. In alternativen Ausführungen kann das Mehrplatzladegerät zur parallelen Durchführung von mehreren gleichzeitigen Batterieladevorgängen an zwei oder mehr Ladeplätzen eingerichtet sein.

In einer Weiterbildung der Erfindung weist die Anzeigebefehlseinheit einen Aktiv-Betriebsmodus, den sie bei Aktivierung einnimmt und in dem sie den Ladezustandsanzeigebefehl sendet, und einen Standby-Betriebsmodus auf, in den sie vom Aktiv-Betriebsmodus selbsttätig wechselt und in dem sie den Ladezustandsanzeigebefehl nicht sendet. In diesem Fall kann sich die Anzeigebefehlseinheit energiesparend im Standby-Betriebsmodus befinden, bis sie vom Benutzer zwecks Anzeigen des Ladezustands einer vom Ladegerät aufgenommenen Batterieeinheit aktiviert wird, wodurch sie in den Aktiv-Betriebsmodus wechselt, um den Ladezustandsanzeigebefehl zu senden. Anschließend kann sie selbsttätig wieder in den Standby-Betriebsmodus wechseln, z.B. nach Ablauf einer vorgegebenen Zeitdauer bzw. nach abgeschlossenem Senden des Ladezustandsanzeigebefehls.

In einer Weiterbildung der Erfindung weist das Mehrplatzladegerät eine spezielle Energieversorgung für die Anzeigebefehlseinheit auf, wobei diese Energieversorgung eine Meistlade-Erkennungseinheit zur Erkennung einer im Mehrplatzladegerät aufgenommenen Meistlade-Batterieeinheit mit höchstem Ladezustand und eine Zuweisungseinheit umfasst, die der Anzeigebefehlseinheit die erkannte Meistlade-Batterieeinheit zur Versorgung mit elektrischer Energie zuweist. Dadurch kann die Anzeigebefehlseinheit mit elektrischer Energie jeweils aus derjenigen Batterieeinheit gespeist werden, die unter allen momentan im Mehrplatzladegerät befindlichen Batterieeinheiten den höchsten Ladezustand aufweist, d.h. am meisten geladen ist.

Dies gewährleistet eine hohe Zuverlässigkeit und Verfügbarkeit der Funktion der Anzeigebefehlseinheit auch in Zeiträumen, in denen keine externe Stromversorgung für das Mehrplatzladegerät vorhanden ist, z.B. in Zeiträumen, in denen das Mehrplatzladegerät nicht über ein Netzanschlusskabel mit einem Stromnetz verbunden ist, und ohne dass das Ladegerät hierfür eine integrierte elektrische Energieversorgung benötigt. Bei Bedarf kann in entsprechenden Realisierungen vorgesehen sein, dass auch die batterieseitigen Anzeigeeinheiten, denen die Anzeigebefehlseinheit den Ladezustandsanzeigebefehl sendet, von der erkannten Meistlade-Batterieeinheit gespeist werden, um den Ladezustand der betreffenden Batterieeinheit anzuzeigen. Dies ermöglicht dann z.B. das Anzeigen des Ladezustands für eine vollständig entladene Batterieeinheit, ohne dass das Ladegerät hierfür an eine externe Stromversorgung angeschlossen oder über eine eingebaute Energieversorgung verfügen muss. In alternativen Ausführungen kann die Anzeigebefehlseinheit von irgendeiner der zum Laden aufgenommenen Batterieeinheiten oder von einer eigenen Versorgungsbatterie elektrisch gespeist werden, und/oder die batterieseitigen Anzeigeeinheiten werden jeweils von der betreffenden Batterieeinheit gespeist.

In einer Ausgestaltung der Erfindung ist das Mehrplatzladegerät dafür eingerichtet, bei Betätigung der Befehlsaktivierungseinheit, wenn es sich in einem Standby-Betriebsmodus befindet, einen Geräteinitialisierungsvorgang durchzuführen und ihre Anzeigebefehlseinheit zum Senden des Ladezustandsanzeigebefehls sowie ihre Anzeigeeinheit zum Anzeigen einer Information über den Geräteinitialisierungsvorgang zu aktivieren. Durch das Anzeigen des Geräteinitialisierungsvorgangs kann der Benutzer z.B. über die ordnungsgemäße Bereitschaft des Mehrplatzladegeräts informiert werden, wenn er dieses durch Betätigung ihrer Befehlsaktivierungseinheit aus ihrem Standby-Betriebsmodus heraus weckt, und durch die Auslösung des Ladezustandsanzeigebefehls wird er von den im Mehrplatzladegerät aufgenommenen Batterieeinheiten an deren Anzeigeeinheiten über deren Ladezustand informiert. Der Geräteinitialisierungsvorgang kann optional auch ein Aktivieren des zuvor inaktiven Ladebetriebs des Gerätes beinhalten, d.h. die Befehlsaktivierungseinheit kann in diesem Fall zusätzlich als eine Art von Ein/Aus-Schalter für das Gerät fungieren.

Das erfindungsgemäße Batterie-Mehrplatzladegerät-Set umfasst das erfindungsgemäße Mehrplatzladegerät und mindestens eine am jeweiligen Ladeplatz des Mehrplatzladegeräts aufnehmbare Batterieeinheit, die eine Befehlsempfangseinheit zum Empfangen des von der Anzeigebefehlseinheit gesendeten Ladezustandsanzeigebefehls und eine batterieseitige Anzeigeeinheit aufweist, die zum Anzeigen eines Ladezustands der Batterieeinheit eingerichtet ist. Das erfindungsgemäße Batterie-Mehrplatzladegerät-Set stellt somit in vorteilhafter Weise eine Gesamtheit aus erfindungsgemäßem Mehrplatzladegerät und einer oder mehreren wiederaufladbaren Batterieeinheiten dar, die von dem Mehrplatzladegerät elektrisch geladen werden können. Die jeweilige Batterieeinheit verfügt über eine Befehlsempfangseinheit zum Empfangen des von der Anzeigebefehlseinheit des Mehrplatzladegeräts gesendeten Ladezustandsanzeigebefehls und über eine batterieseitige Anzeigeeinheit, die zumindest zum Anzeigen eines Ladezustands der Batterieeinheit eingerichtet ist. Der Benutzer kann folglich über die Befehlsaktivierungseinheit des Mehrplatzladegeräts die jeweilige Batterieeinheit dazu veranlassen, ihren momentanen Ladezustand an ihrer Anzeigeeinheit anzuzeigen. Dies kann eine Ladezustandsanzeige am Mehrplatzladegerät selbst entbehrlich machen.

In einer Weiterbildung der Erfindung ist die jeweilige Batterieeinheit dafür eingerichtet, ihre batterieseitige Anzeigeeinheit zum Anzeigen ihres Ladezustands im Fall, dass die Batterieeinheit an einem der Ladeplätze aufgenommen ist, inaktiv zu halten, wenn sie keinen laufenden Batterieladevorgang erfährt und den Ladezustandsanzeigebefehl nicht empfängt. Dies vermeidet ein dauerhaftes Anzeigen des Batterieladezustands. Stattdessen erfolgt die Ladezustandsanzeige gezielt zu den Zeitpunkten, in denen diese Information für den Benutzer besonders nützlich ist oder von ihm gewünscht wird. In alternativen Ausführungen kann eine bleibende Ladezustandsanzeige vorgesehen sein, wenn dies für bestimmte Anwendungen günstig ist.

In einer Weiterbildung der Erfindung ist die Batterieeinheit ein Akkupack zur elektrischen Energieversorgung eines elektrisch betriebenen Garten- oder Forstbearbeitungsgerätes oder eines elektrisch betriebenen Handwerkzeuggerätes. In diesem Fall lässt sich ein derartiger Akkupack durch das erfindungsgemäße Mehrplatzladegerät elektrisch aufladen. Häufig besitzt ein derartiger Akkupack bereits eine eingebaute, batterieseitige Anzeigeeinheit, die dann zur Ladezustandsanzeige auf Benutzeranforderung hin genutzt werden kann.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine Perspektivansicht eines Mehrplatzladegeräts mit vier Ladeplätzen und darin aufgenommenen Batterieeinheiten,
- Fig. 2: eine Blockdiagrammdarstellung des Mehrplatzladegeräts von Fig. 1 ohne aufgenommene Batterieeinheiten,
- Fig. 3: die Blockdiagrammdarstellung von Fig. 2 mit vier aufgenommenen Batterieeinheiten während einer Ladezustandsabfrage in einem ladeinaktiven Gerätebetriebszustand ,
- Fig. 4: die Blockdiagrammdarstellung von Fig. 2 mit drei aufgenommenen Batterieeinheiten in einem ladeaktiven Gerätebetriebszustand und
- Fig. 5: die Blockdiagrammdarstellung von Fig. 4 im ladeaktiven Gerätebetriebszustand mit zusätzlicher Ladezustandsabfrage.

Wie in den Figuren anhand eines exemplarischen Ausführungsbeispiels veranschaulicht, weist das erfindungsgemäße Mehrplatzladegerät eine Mehrzahl von Ladeplätzen, im gezeigten Beispiel vier Ladeplätze L₁, L₂, L₃, L₄, in nicht gezeigten Ausführungen nur zwei oder drei oder eine beliebige Anzahl von mehr als vier Ladeplätzen, eine Anzeigebefehlseinheit 1 und eine nutzerbetätigbare bzw. nutzerbetätigte Befehlsaktivierungseinheit 2 auf. Jeder Ladeplatz L₁ bis L₄ ist zum entnehmbaren Aufnehmen und elektrischen Laden einer wiederaufladbaren Batterieeinheit eingerichtet. Die Gesamtheit aus Mehrplatzladegerät 3 und einer oder mehreren wiederaufladbaren Batterieeinheiten, die mit dem Mehrplatzladegerät 3 elektrisch aufgeladen werden können, bildet ein entsprechendes Batterie-Mehrplatzladegerät-Set. In den Figuren sind beispielhaft vier Batterieeinheiten B₁, B₂, B₃, B₄ gezeigt. Bei den Batterieeinheiten B₁ bis B₄ kann es sich, wie in den Figuren gezeigt, beispielsweise um einen jeweiligen Akkupack A₁, A₂, A₃, A₄ zur elektrischen Energieversorgung eines elektrisch betriebenen Garten- oder Forstbearbeitungsgeräts oder eines elektrisch betriebenen Handwerkzeuggeräts bzw. Heimwerkergeräts handeln.

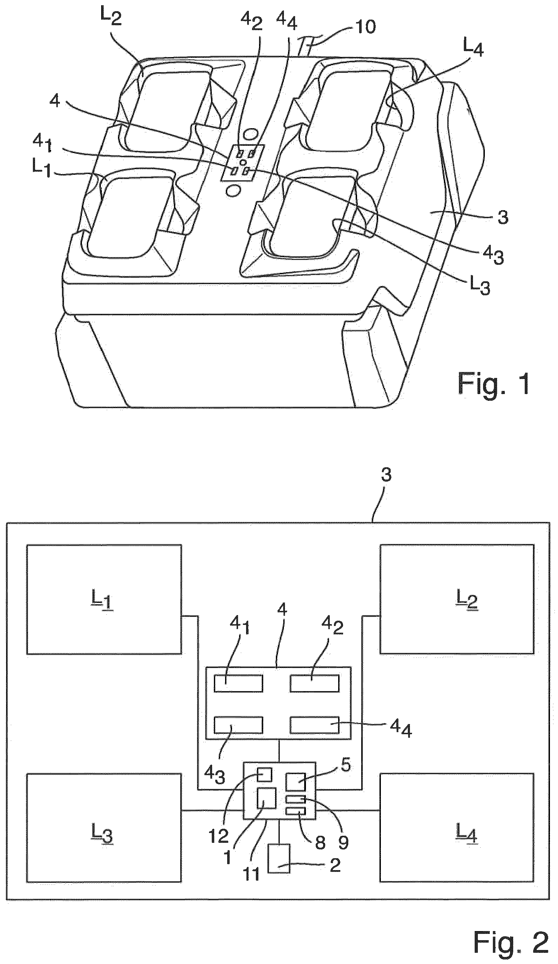

Die Befehlsaktivierungseinheit 2 ist zur Aktivierung der Anzeigebefehlseinheit 1 eingerichtet. Der Benutzer kann die Anzeigebefehlseinheit 1 dementsprechend durch Betätigung der Befehlsaktivierungseinheit 2 aktivieren. Die Befehlsaktivierungseinheit 2 kann z.B. eine Drucktaste, wie im Beispiel von Fig. 1 veranschaulicht, oder ein anderes herkömmliches Bedienelement als Nutzerschnittstelle beinhalten, das der Benutzer zur Auslösung der Aktivierung der Anzeigebefehlseinheit 1 betätigen kann.

Die Anzeigebefehlseinheit 1 ist zum Senden eines Ladezustandsanzeigebefehls B_{A} eingerichtet, der die am jeweiligen Ladeplatz L₁ bis L₄ aufgenommene Batterieeinheit B₁ bis B₄ zum Anzeigen ihres Ladezustands an einer batterieseitigen Anzeigeeinheit 7 befehligt. Dazu weist die jeweilige Batterieeinheit B₁ bis B₄ eine Befehlsempfangseinheit 6 zum Empfangen des von der Anzeigebefehlseinheit 1 gesendeten Ladezustandsanzeigebefehls B_{A} und die batterieseitige Anzeigeeinheit 7 auf, die zum Anzeigen des Ladezustands der Batterieeinheit B₁ bis B₄ eingerichtet ist. Die batterieseitige Anzeigeeinheit 7 der jeweiligen Batterieeinheit B₁ bis B₄ kann von einer beliebigen herkömmlichen Bauart sein, wie dies dem Fachmann von wiederaufladbaren Batterieeinheiten an sich bekannt ist. Insbesondere kann die batterieseitige Anzeigeeinheit 7 wie im gezeigten Beispiel ein optisches Anzeigeteil beinhalten, z.B. ein herkömmliches LED(Leuchtdioden)-Anzeigeteil. Im gezeigten Beispiel weisen die batterieseitigen Anzeigeeinheiten 7 jeweils einen vierstufigen Anzeigeteil mit vier optischen Anzeigeelementen, z.B. LED-Anzeigeelementen, auf, die den Ladezustand beispielsweise bezogen auf die von der betreffenden Batterieeinheit gelieferte Batteriespannung anzeigen.

Der Ladezustandsanzeigebefehl B_{A} kann je nach Bedarf eine beliebige herkömmliche, dem Fachmann an sich bekannte Befehlsignalform haben, z.B. in Form eines einzelnen Signalimpulses oder eines über eine vorgebbare Zeitdauer hinweg andauernden Signals oder eines periodischen Signals. Je nach Bedarf und Anwendungsfall kann der Ladezustandsanzeigebefehl B_{A} z.B. als ein elektrisches oder elektromagnetisches oder optisches Signal drahtgebunden oder drahtlos übertragen werden, wobei die Anzeigebefehlseinheit 1 und die jeweilige Befehlsempfangseinheit 6 hierzu geeignet ausgelegt sind, wie dem Fachmann an sich bekannt, was daher hier keiner näheren Erläuterungen bedarf.

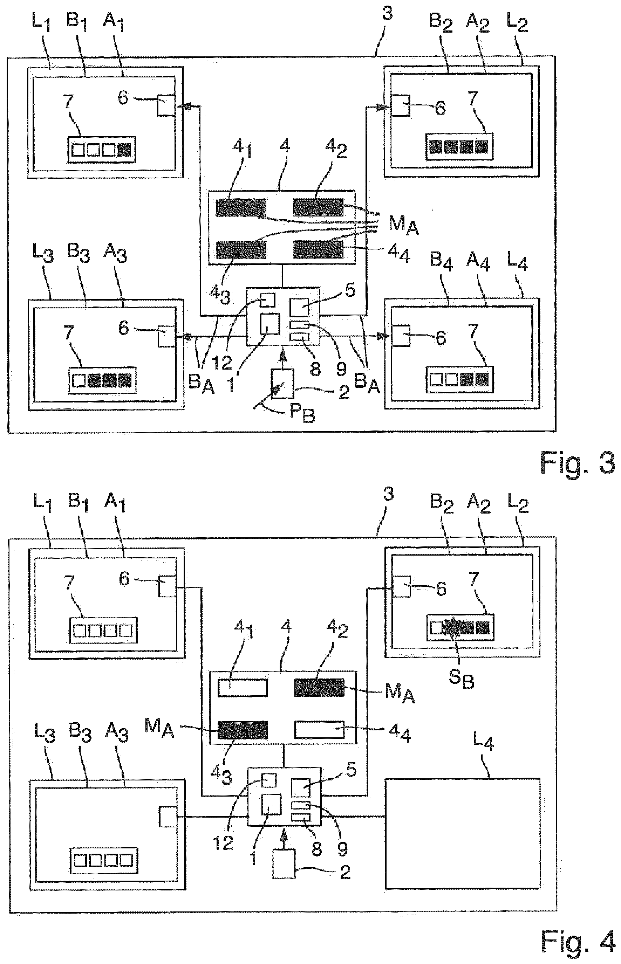

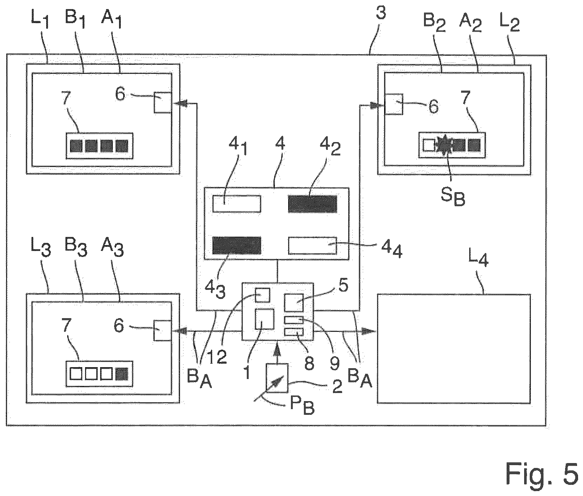

In den Fig. 3 und 5 ist das Senden des Ladezustandsanzeigebefehls B_{A} durch die Anzeigebefehlseinheit 1 zu den Befehlsempfangseinheiten 6 der Batterieeinheiten B₁ bis B₄ in je einer entsprechenden Betriebssituation des Mehrplatzladegeräts 3 veranschaulicht, wobei die Nutzerbetätigung der Befehlsaktivierungseinheit 2 durch einen auf die Befehlsaktivierungseinheit 2 zeigenden Betätigungspfeil P_{B} repräsentiert ist. Speziell befindet sich das Mehrplatzladegerät 3 in Fig. 3 in einem ladeinaktiven Betriebsmodus, z.B. weil es von einer Spannungsversorgung abgekoppelt ist, und in Fig. 5 in einem aktiven Ladebetriebsmodus.

In entsprechenden Ausführungen ist das Mehrplatzladegerät 3, wie im gezeigten Beispiel, dafür eingerichtet, im aktiven Ladebetriebsmodus einen laufenden Batterieladevorgang beizubehalten, wenn die Anzeigebefehlseinheit 1 den Ladezustandsanzeigebefehl B_{A} sendet. Dies bedeutet, dass das vom Benutzer angeforderte Anzeigen des bzw. der Ladezustände der einen oder mehreren vom Mehrplatzladegerät 3 momentan aufgenommenen Batterieeinheiten ohne Unterbrechung des aktiven Aufladens einer oder mehrerer dieser Batterieeinheiten durch das Mehrplatzladegerät 3 erfolgen kann.

Dies ist konkret in den Fig. 4 und 5 veranschaulicht, wobei in dieser gezeigten Beispielssituation ein von der jeweiligen batterieseitigen Anzeigeeinheit 7 abgegebenes optisches Blinksignal S_{B} anzeigt, dass die betreffende Batterieeinheit, hier die Batterieeinheit B₂, momentan aufgeladen wird. Ausgehend von diesem aktiven Gerätebetriebsmodus, d.h. aktiven Ladebetriebsmodus, mit momentaner Aufladung der Batterieeinheit B₂ gemäß Fig. 4 veranschaulicht Fig. 5 das benutzerangeforderte Anzeigen der Ladezustände der momentan vom Mehrplatzladegerät 3 aufgenommenen Batterieeinheiten, hier der Batterieeinheiten B₁, B₂ und B₃, an deren Anzeigeeinheiten 7. Das gemäß Fig. 5 weiterhin aktiviert bleibende Blinksignal S_{B} zeigt an, dass der aktive Aufladevorgang für die Batterieeinheit B₂ auch während dieser nutzerangeforderten Ladezustandsanzeige ohne Unterbrechung aufrechterhalten wird.

In entsprechenden Ausführungen ist das Mehrplatzladegerät 3, wie im gezeigten Beispiel, zur sequenziellen Durchführung von Batterieladevorgängen an jeweils einem der mehreren Ladeplätze L₁ bis L₄ eingerichtet. In den Betriebszuständen der Fig. 4 und 5 lädt das Mehrplatzladegerät 3 die zweite Batterieeinheit B₂ auf, wie durch das Blinksignal S_{B} angezeigt. Andere eventuell vom Mehrplatzladegerät 3 aufgenommene Batterieeinheiten, in den Betriebssituationen der Fig. 4 und 5 die Batterieeinheiten B₁ und B₃, sind entweder bereits voll aufgeladen oder warten auf ihren Aufladevorgang, der nach Abschluss des Aufladevorgangs für die zweite Batterieeinheit B₂ beginnen kann.

Das Mehrplatzladegerät 3 kann beispielsweise derart ausgelegt sein, dass es nach einem Betriebsstart, z.B. initiiert durch das Anschließen an eine Stromversorgung, zunächst den ersten Ladeplatz L₁ nach Vorhandensein einer ladbaren Batterieeinheit B₁ abfragt und bejahendenfalls diese Batterieeinheit B₁ bis zum Erreichen ihres vollen Ladezustands lädt, soweit sie noch nicht voll geladen ist, d.h. noch nicht ihre maximale Batteriespannung bzw. ihre maximal einspeicherbare Ladungsmenge erreicht hat, um danach sukzessive mit den weiteren Ladeplätzen L₂, L₃ und L₄ entsprechend zu verfahren. In alternativen Ausführungen ist das Mehrplatzladegerät 3 zum gleichzeitigen Aufladen mehrerer aufgenommener Batterieeinheiten ausgelegt.

In vorteilhaften Ausführungsformen weist die Anzeigebefehlseinheit 1, und vorzugsweise das Mehrplatzladegerät 3 insgesamt, einen Aktiv-Betriebsmodus und einen Standby-Betriebsmodus auf, wie im gezeigten Beispiel realisiert. Den Aktiv-Betriebsmodus nimmt die Anzeigebefehlseinheit 1 ein, wenn sie durch Nutzerbetätigung der Befehlsaktivierungseinheit 2 aktiviert wird, und sie sendet dann den Ladezustandsanzeigebefehl B_{A}. Nach dem Senden des Ladezustandsanzeigebefehls B_{A} kehrt die Anzeigebefehlseinheit 1 selbsttätig wieder vom Aktiv-Betriebsmodus in den Standby-Betriebsmodus zurück, z.B. nach Ablauf einer gewissen Zeitdauer, wobei sie im Standby-Betriebsmodus inaktiv bleibt und insbesondere den Ladezustandsanzeigebefehl B_{A} nicht sendet. Das Mehrplatzladegerät 3 kann sich insbesondere dann im Standby-Betriebsmodus befinden, wenn es nicht an eine Spannungsversorgung angeschlossen ist.

In vorteilhaften Ausführungsformen beinhaltet das Mehrplatzladegerät 3, wie im gezeigten Beispiel, eine Batteriezustandserkennungseinheit 5, die zur Gewinnung einer binären Ladbarkeitsinformation eingerichtet ist, die angibt, ob am jeweiligen Ladeplatz L₁, L₂, ... eine ladbare Batterieeinheit aufgenommen ist, und eine geräteseitige Anzeigeeinheit 4 mit je einem Anzeigeteil 4₁, 4₂, ... pro Ladeplatz L₁, L₂, ... Im gezeigten Beispiel ist die geräteseitige Anzeigeeinheit 4 eine optische Anzeigeeinheit mit je einem optischen Anzeigeteil 4₁ bis 4₄ pro Ladeplatz L₁ bis L₄, alternativ oder zusätzlich kann die Anzeigeeinheit 4 beispielsweise einen akustischen Anzeigeteil beinhalten. Der jeweilige Anzeigeteil 4₁ bis 4₄ ist dafür eingerichtet, die von der Batteriezustandserkennungseinheit 5 gewonnene Ladbarkeitsinformation zu empfangen und als eine binäre Anzeigeinformation M_{A} anzuzeigen. Für die Batteriezustandserkennungseinheit 5 ist eine beliebige, herkömmliche, dem Fachmann für diesen Zweck an sich bekannte Realisierung verwendbar, wozu sie auf die Fähigkeit ausgelegt ist, zu erkennen, ob sich am betreffenden Ladeplatz L₁ bis L₄ überhaupt eine Batterieeinheit befindet, und, wenn ja, ob diese ladbar ist, d.h. ob es sich um eine Batterieeinheit handelt, die grundsätzlich zum Laden durch das Mehrplatzladegerät 3 geeignet ist und die sich in einem ordnungsgemäßen, fehlerfreien Zustand befindet. Die binäre Anzeigeinformation M_{A}, gibt somit grundsätzlich an, ob am zugehörigen Ladeplatz L₁ bis L₄ eine ladbare Batterieeinheit aufgenommen ist. Das Mehrplatzladegerät 3 führt diese Funktionalität mit seiner Batteriezustandserkennungseinheit 5 und seiner Anzeigeeinheit 4 insbesondere während eines Initialisierungsvorgangs aus, wenn es aus seinem Standby-Betriebsmodus heraus z.B. durch Anschließen an eine Strom- bzw. Spannungsversorgung in seinen aktiven Ladebetriebsmodus versetzt wird.

Diese Anzeigefunktionalität ist in verschiedenen Betriebssituationen in den Fig. 3, 4 und 5 veranschaulicht, wobei in diesem Beispiel der jeweilige Anzeigeteil 4₁ bis 4₄ durch ein LED-Anzeigeelement gebildet ist und die binäre Anzeigeinformation M_{A} darin besteht, dass das betreffende LED-Anzeigeelement leuchtet, in den Figuren als schwarzes Feld repräsentiert, oder nicht leuchtet, in den Figuren durch ein weißes Feld repräsentiert. In den Betriebssituationen der Fig. 4 und 5 befindet sich im Ladeplatz L₄ keine Batterieeinheit, weshalb der zugehörige Anzeigeteil 4₄ nicht leuchtet. Weiter ist für die Betriebssituationen der Fig. 4 und 5 angenommen, dass das Gerät 3 nach einem Start seines aktiven Ladebetriebs im Rahmen einer sequentiellen Abarbeitung zunächst den ersten Ladeplatz L1 abgefragt und die dortige Batterieeinheit B₁ bei Bedarf vollständig aufgeladen hat und anschließend zum zweiten Ladeplatz L₂ weitergegangen ist. Dabei ist im gezeigten Beispiel vorgesehen, dass die anfängliche binäre Anzeigeinformation M_{A} wieder erlischt, wenn die betreffende Batterieeinheit, im Fall der Fig. 4 und 5 die Batterieeinheit B₁, voll geladen ist. Folglich leuchtet in den Fig. 4 und 5 der zugehörige Anzeigeteil 4₁ nicht. Die im Ladeplatz L₂ aufgenommene Batterieeinheit B₂ wird gerade aufgeladen, wie oben erläutert, was bedeutet, dass sie noch nicht vollständig geladen ist, weshalb der zugehörige Anzeigeteil 4₂ leuchtet, d.h. die von ihr abgegebene binäre Anzeigeinformation M_{A} gibt an, dass im zugehörigen Ladeplatz L₂ eine ladbare, im laufenden Ladebetrieb vom Gerät 3 noch nicht als voll geladen erkannte Batterieeinheit B₂ aufgenommen ist. Analoges gilt für den Anzeigeteil 4₃, der dem Ladeplatz L₃ zugeordnet ist und in den Betriebssituationen der Fig. 4 und 5 ebenfalls leuchtet, um anzuzeigen, dass dort eine ladbare Batterieeinheit B₃ vorliegt, die noch auf ihre Abarbeitung durch das sequentiell arbeitende Gerät 3 wartet.

In entsprechenden Realisierungen wird die geräteseitige Anzeigeeinheit 4, wie im gezeigten Beispiel, während des Standby-Betriebsmodus des Mehrplatzladegeräts 3 grundsätzlich ebenfalls inaktiv gehalten, jedoch im Fall einer Ladezustandsabfrage auch bei inaktiv bleibendem Ladebetrieb des Gerätes 3 aktiviert. Dementsprechend werden die Anzeigeteile 4₁ bis 4₄ in der betreffenden Betriebssituation gemäß Fig. 3, in der sich das Mehrplatzladegerät 3 im ladeinaktiven Betriebsmodus befindet, aktiviert, wenn auf Benutzeranforderung hin der Ladezustand der momentan im Mehrplatzladegerät 3 aufgenommenen Batterieeinheiten B₁ bis B₄ bzw. B₁ bis B₃ abgefragt und an deren batterieseitigen Anzeigeeinheiten 7 angezeigt wird.

Konkret veranschaulicht Fig. 3 exemplarisch eine Betriebssituation, bei der alle Ladeplätze L₁ bis L₄ von einer jeweiligen Batterieeinheit B₁ bis B₄ belegt sind und sich das Mehrplatzladegerät 3 zunächst in einem Standby-Betriebsmodus bzw. Ruhemodus befindet, beispielsweise weil es momentan nicht über ein in Fig. 1 angedeutetes Netzanschlusskabel 10 an eine externe Spannungs- bzw. Stromversorgung angekoppelt ist, oder eine entsprechende externe Stromzufuhr abgeschaltet ist, z.B. über einen zugehörigen Aus-Schalter oder Standby-Schalter. In diesem Standby- bzw. Ruhemodus bleibt die geräteseitige Anzeigeeinheit 4 normalerweise inaktiv.

Sobald ausgehend von dieser Situation der Benutzer die Befehlsaktivierungseinheit 2 betätigt und dadurch eine Geräteinitialisierung auslöst, woraufhin die Anzeigebefehlseinheit 1 zum Senden des Ladezustandsbefehls B_{A} aktiviert wird, befehligt dies die an den Ladeplätzen L₁ bis L₄ aufgenommenen Batterieeinheiten B₁ bis B₄ zum Anzeigen ihres Ladezustands an ihrer batterieseitigen Anzeigeeinheit 7. Dazu empfangen die Befehlsempfangseinheiten 6 der an den Ladeplätzen L₁ bis L₄ aufgenommenen Batterieeinheiten B₁ bis B₄ den Ladezustandsanzeigebefehl B_{A} und veranlassen eine entsprechende Erfassung und Anzeige des momentanen Ladezustands der betreffenden Batterieeinheit B₁ bis B₄ an deren batterieseitiger Anzeigeeinheit 7.

In vorteilhaften Realisierungen veranlasst, wie im gezeigten Beispiel, die Geräteinitialisierung durch die nutzerausgelöste Ladezustandsabfrage gleichzeitig die Batteriezustandserkennungseinheit 5 dazu, die Ladeplätze L₁, L₂, ... hinsichtlich des Vorhandenseins ladbarer Batterieeinheiten abzufragen und die jeweils zugehörige binäre Anzeigeinformation M_{A} an den Anzeigeteilen 4₁, 4₂, ... der geräteseitige Anzeigeeinheit 4 anzuzeigen. Da im Fall von Fig. 3 angenommen ist, dass sich an allen Ladeplätzen L₁ bis L₄ eine ladbare Batterieeinheit B₁ bis B₄ befindet, leuchten alle vier zugehörigen LED-Anzeigeelemente der Anzeigeteile 4₁ bis 4₄.

In Fig. 3 ist der Fall veranschaulicht, dass die Batterieeinheit B₁ am Ladeplatz L₁ nur relativ wenig geladen ist, wofür ein erstes der vier Anzeigeelemente ihrer Anzeigeeinheit 7 leuchtet, in den Figuren als schwarzes Feld symbolisiert, während die übrigen drei Anzeigeelemente nicht leuchten, in den Figuren als weißes Feld symbolisiert. Wenn der Ladezustand über die Batteriespannung erfasst wird, wie oben erwähnt, kann dies z.B. einem Ladezustand entsprechen, in dem die Batteriespannung der Batterieeinheit B₁ einen Wert von 20% der Maximalspannung erreicht hat. Die Batteriespannung der Batterieeinheit B₄ im Ladeplatz L₄ hat einen Wert von 40% der Maximalspannung erreicht, wofür das erste und ein zweites der vier Anzeigeelemente ihrer Anzeigeeinheit 7 leuchten, die anderen beiden nicht. Die Batterieeinheit B₃ am Ladeplatz L₃ hat einen Wert von 60% der Maximalspannung erreicht, wofür zusätzlich ein drittes der vier Anzeigeelemente ihrer Anzeigeeinheit 7 leuchtet und nur ein viertes, letztes Anzeigeelement nicht leuchtet. Batteriespannung der Batterieeinheit B₂ am Ladeplatz L₂ hat einen Wert von 80% der Maximalspannung erreicht, wofür alle vier Anzeigeelemente ihrer Anzeigeeinheit 7 leuchten.

Vorzugsweise werden die Anzeigeinformationen an den Anzeigeeinheiten 7 und an der Anzeigeeinheit 4 temporär für eine vorgebbare Zeitdauer aufrechterhalten, wonach das Gerät 3 wieder in seinen Standby-Betriebsmodus zurückkehrt und die batterieseitigen Anzeigeeinheiten 7 sowie die geräteseitige Anzeigeeinheit 4 wieder deaktiviert werden.

In vorteilhaften Ausführungen sind die Batterieeinheiten B₁ bis B₄, wie im gezeigten Beispiel, dafür eingerichtet, ihre batterieseitige Anzeigeeinheit 7 zum Anzeigen ihres Ladezustands inaktiv zu halten, wenn die Batterieeinheit B₁ bis B₄ an einem der Ladeplätze L₁ bis L₄ aufgenommen ist, jedoch keinen laufenden Batterieladevorgang erfährt, d.h. momentan nicht geladen wird, und auch den Ladezustandsanzeigebefehl B_{A} nicht empfängt. Deshalb leuchten in der Betriebssituation von Fig. 4 die Anzeigeelemente der Anzeigeeinheiten 7 der Batterieeinheiten B₁ und B₃, die momentan nicht aufgeladen werden, nicht. Dies vermeidet ein unnötiges dauerhaftes Anzeigen der Batterieladezustände und den damit einhergehenden Energieverbrauch. Stattdessen kann der Benutzer gezielt das Anzeigen der Batterieladezustände durch Betätigen der Befehlsaktivierungseinheit 2 anfordern. Da die Batterieladezustände an den batterieseitigen Anzeigeeinheiten 7 angezeigt werden, ist es nicht zwingend erforderlich, das Mehrplatzladegerät 3 mit einer Anzeigeeinheit auszustatten, die es ermöglicht, die Ladezustände der momentan an den Ladeplätzen L₁ bis L₄ aufgenommenen Batterieeinheiten anzuzeigen, vorzugsweise gleichzeitig. Stattdessen werden hierfür die an den Batterieeinheiten B₁ bis B₄ ohnehin zu diesem Anzeigezweck vorhandenen, batterieseitigen Anzeigeeinheiten 7 genutzt.

Bei der Betriebssituation von Fig. 5 wird speziell von der Betriebssituation gemäß Fig. 4 ausgegangen, in der sich das Mehrplatzladegerät 3 im aktiven Ladebetriebsmodus befindet, wobei im gezeigten Zeitpunkt gerade die Batterieeinheit B₂ am Ladeplatz L₂ aufgeladen wird. Da sich somit die Batterieeinheit B₂ momentan im aktiven Aufladebetrieb befindet, zeigt sie gemäß Fig. 4 auch ohne Empfang des Ladezustandsanzeigebefehls B_{A} an ihrer Anzeigeeinheit 7 ihren aktiven Ladezustand an. Beispielhaft ist angenommen, dass ihre Batteriespannung zwischen 60% und 80 % der Maximalspannung liegt, wofür drei der vier Anzeigeelemente der Anzeigeeinheit 7 leuchten und eines nicht. Zusätzlich wird das jeweils letzte leuchtende Anzeigeelement des mehrstufigen Anzeigeteils der Anzeigeeinheit 7 in einem Blinkmodus aktiviert, d.h. es gibt das Blinksignal S_{B} ab, das anzeigt, dass die betreffende Batterieeinheit, in der Betriebssituation von Fig. 4 die Batterieeinheit B₂, derzeit aufgeladen wird. Die in der Betriebssituation von Fig. 4 an den Ladeplätzen L₁ und L₃ des Weiteren aufgenommenen Batterieeinheiten B₁, B₃ halten ihre jeweils zugehörige Anzeigeeinheit 7 inaktiv, wie oben bereits erwähnt, da sie momentan nicht geladen werden und auch nicht den Ladezustandsanzeigebefehl B_{A} empfangen.

Sobald dann der Benutzer die Anzeigebefehlseinheit 1 gemäß Fig. 5 zum Senden des Ladezustandsanzeigebefehls B_{A} veranlasst, wird in den an den Ladeplätzen L₁ bis L₃ aufgenommenen Batterieeinheiten B₁ bis B₃ nach Empfangen des Ladezustandsanzeigebefehls B_{A} über ihre Befehlsempfangseinheit 6 das Anzeigen ihrer Ladezustände ausgelöst. Dies erfolgt, wie bereits erwähnt, ohne Unterbrechung des Ladevorgangs für die Batterieeinheit B₂. Da die Batterieeinheit B₂ hierbei bereits ihren Ladezustand während ihres Aufladevorgangs anzeigt, ändert sich für diese Batterieeinheit B₂ an deren Ladezustandsanzeige nichts. Zusätzlich zeigen auf diese Benutzerabfrage hin nun jedoch auch die Batterieeinheiten B₁ und B₃ an den Ladeplätzen L₁ und L₃ ihren jeweiligen Ladezustand über ihre zugehörige Anzeigeeinheit 7 an. Exemplarisch ist in Fig. 5 der Fall betrachtet, dass die Batterieeinheit B₁ vollständig oder zumindest so weit geladen ist, dass ihre Batteriespannung über 80% der Maximalspannung liegt, wofür alle vier Anzeigeelemente ihrer Anzeigeeinheit 7 leuchten, und dass die Batteriespannung der Batterieeinheit B₃ erst zwischen 20% und 40% der Maximalspannung liegt, wofür eines der vier Anzeigeelemente ihrer Anzeigeeinheit 7 leuchtet.

In vorteilhaften Ausführungen weist das Mehrplatzladegerät 3, wie im gezeigten Beispiel, für die Anzeigebefehlseinheit 1 eine Energieversorgung mit einer Meistlade-Erkennungseinheit 8 und einer Zuweisungseinheit 9 auf. Die Meistlade-Erkennungseinheit 8 ist zur Erkennung einer im Mehrplatzladegerät 3 aufgenommenen Meistlade-Batterieeinheit mit höchstem Ladezustand eingerichtet, wobei unter der Meistlade-Batterieeinheit vorliegend diejenige Batterieeinheit zu verstehen ist, die von allen momentan an den Ladeplätzen L₁ bis L₄ des Mehrplatzladegeräts 3 befindlichen Batterieeinheiten am meisten geladen ist, d.h. den höchsten Ladezustand aufweist. Je nach Art der Ladezustandserfassung muss der höchste Ladezustand nicht zwangsläufig bedeuten, dass es sich um die Batterieeinheit mit der meisten eingespeicherten elektrischen Ladung handelt, es kann sich z.B. auch um die Batterieeinheit mit der höchsten Batteriespannung handeln. Dies braucht z.B. wegen unterschiedlicher Batteriekapazitäten oder Batteriealterungseffekten nicht zwingend mit der höchsten Ladungsmenge korrespondieren. Die Zuweisungseinheit 9 ist dafür ausgelegt, der Anzeigebefehlseinheit 1 die erkannte Meistlade-Batterieeinheit zur Versorgung mit elektrischer Energie zuzuweisen, d.h. die Zuweisungseinheit 9 sorgt dafür, dass die zum Betrieb der Anzeigebefehlseinheit 1 benötigte elektrische Energie derjenigen Batterieeinheit entnommen wird, die von allen an den Ladeplätzen L₁ bis L₄ momentan aufgenommenen Batterieeinheiten den höchsten Ladezustand bzw. die höchste Batteriespannung aufweist. Dies gewährleistet eine zuverlässige Versorgung der Anzeigebefehlseinheit 1 mit der benötigten elektrischen Energie insbesondere in Zeiträumen, in denen das Mehrplatzladegerät 3 nicht an eine externe Stromversorgung angeschlossen ist und daher für dessen Betrieb keine externe elektrische Energie zur Verfügung steht.

In entsprechenden Realisierungen ist, wie beim gezeigten Beispiel, eine Fehlererkennungseinheit 12 vorgesehen, die zur Gewinnung einer Fehlerinformation eingerichtet ist, die eine geräteseitige Fehlfunktion und/oder eine Fehlfunktion einer an einem der Ladeplätze L₁, L₂, ... aufgenommenen Batterieeinheit angibt. Die geräteseitige Anzeigeeinheit 4 ist in diesem Fall zum Empfangen und Anzeigen der Fehlerinformation eingerichtet.

Damit lässt sich die geräteseitige Anzeigeeinheit 4 vorteilhaft zusätzlich für eine Fehleranzeigefunktionalität nutzen.

Die Fehlererkennungseinheit 5 kann von einer beliebigen herkömmlichen, dem Fachmann an sich bekannten Bauart sein, die unter anderem insbesondere auch davon abhängt, welche Fehler hierdurch erkannt werden sollen, um sie zur Anzeige zu bringen. In entsprechenden Realisierungen können mehrere Fehlertypen diskriminierend, d.h. voneinander unterscheidbar, in unterschiedlicher Weise an der geräteseitigen Anzeigeeinheit 4 angezeigt werden, z.B. durch unterschiedliche Leuchtaktivierungsmuster der vier Anzeigeteile 4₁ bis 4₄ und/oder durch unterschiedliche Leuchtaktivierung des jeweiligen Anzeigeteils 4₁ bis 4₄. So könnte beispielsweise ein erster Fehler durch blinkendes Leuchten aller vier Anzeigeteile 4₁ bis 4₄ angezeigt werden, ein zweiter Fehler durch blinkendes Leuchten nur eines der vier Anzeigeteile 4₁ bis 4₄, ein dritter Fehler durch blinkendes Leuchten eines anderen der vier Anzeigeteile 4₁ bis 4₄ oder durch blinkendes Leuchten des gleichen Anzeigeteils mit anderem Blinkrhythmus etc.

Es sei an dieser Stelle erwähnt, dass in entsprechenden Ausführungsformen der jeweilige Anzeigeteil 4₁ bis 4₄ der geräteseitigen Anzeigeeinheit 4 und/oder der jeweilige Anzeigeteil der batterieseitigen Anzeigeeinheit 7 mehr als zwei mögliche aktive Leuchtzustände aufweisen kann, z.B. zwei aktive Leuchtzustände unterschiedlicher Farbe. Dies kann für bestimmte Anwendungsfälle von Vorteil sein, z.B. die Verwendung roter Leuchtzustände zum Anzeigen von Informationen über fehlerhafte oder kritische Betriebszustände und grüner Leuchtzustände für verschiedene Anzeigen im normalen, ordnungsgemäßen Betrieb des Gerätes 3 bzw. der von ihm aufgenommenen Batterieeinheiten.

In entsprechenden Ausführungen ist das Mehrplatzladegerät 3, wie im gezeigten Beispiel, dafür eingerichtet, bei Betätigung der Befehlsaktivierungseinheit 2 in einem Zustand, in dem es sich im Standby-Betriebsmodus befindet, einen Geräteinitialisierungsvorgang durchzuführen und ihre Anzeigebefehlseinheit 1 zum Senden des Ladezustandsanzeigebefehls B_{A} sowie ihre Anzeigeeinheit 4 zum Anzeigen einer Information über den Geräteinitialisierungsvorgang zu aktivieren. Es versteht sich, dass diese Information über den Geräteinitialisierungsvorgang wiederum unterscheidbar von den Anzeigen anderer Informationen, wie z.B. den erwähnten Fehlerinformationen, angezeigt wird, z. B. durch eine spezifische Blinkfolge aller vier Anzeigeteile 4₁ bis 4₄. Durch das Anzeigen des Geräteinitialisierungsvorgangs kann der Benutzer z.B. darüber informiert werden, ob das Gerät 3 mit allen seinen Komponenten fehlerfrei in Bereitschaft ist. Der Geräteinitialisierungsvorgang kann bei Bedarf auch dazu dienen, das Gerät 3 aus seinem ladeinaktiven Standby-Betriebsmodus heraus in seinen aktiven Ladebetriebsmodus zu versetzen, d.h. das Gerät 3 einzuschalten, um den Ladebetrieb für aufgenommene Batterieeinheiten B₁ bis B₄ zu starten. Durch die Auslösung des Ladezustandsanzeigebefehls wird der Benutzer von den im Mehrplatzladegerät 3 aufgenommenen Batterieeinheiten B₁ bis B₄ an deren Anzeigeeinheiten 7 über deren Ladezustand informiert. Optional kann vorgesehen sein, dass der Geräteinitialisierungsvorgang auch dann erfolgt, wenn das Multiladegerät 3 über das Einstecken seines Netzanschlusskabels 10 an eine Stromversorgung angeschlossen wird und/oder wenn eine Batterieeinheit in einen leeren Ladeplatz eingesetzt wird.

Die Anzeigebefehlseinheit 1 ist in vorteilhaften Ausführungen, wie im gezeigten Beispiel, Bestandteil einer Steuerungseinheit 11, mit der das Mehrplatzladegerät 3 ausgerüstet sein kann und die zur Ausführung der benötigten Ladegerätsteuerungsfunktionen eingerichtet ist.

Die Steuereinheit 11 ist auf Basis einer beliebigen herkömmlichen Ladegerätsteuereinheit realisierbar, in der zusätzlich die vorliegend genannten Ladegerät-Steuerungsfunktionalitäten implementiert sind, wie sich dies für den Fachmann unter Kenntnis dieser Funktionalitäten versteht. Die Steuereinheit 11 umfasst vorzugsweise auch die Batteriezustandserkennungseinheit 5, die Meistlade-Erkennungseinheit 8, die Zuweisungseinheit 9 und die Fehlererkennungseinheit 12, soweit diese Komponenten in der betreffenden Ladegerätausführung vorhanden sind.

Alle Bestandteile der Steuereinheit 11 können je nach Bedarf in Hardware und/oder Software ausgeführt sein, wie dem Fachmann an sich bekannt. Insbesondere beinhaltet die Steuereinheit 11 auch übliche Schnittstellenkomponenten zur drahtlosen oder drahtgebundenen Daten-/Signalkommunikation insbesondere mit den batterieseitigen Befehlsempfangseinheiten 6 und etwaigen weiteren Kommunikationsschnittstellen der Batterieeinheiten B₁ bis B₄ bzw. der Ladeplätze L₁ bis L₄ und optional auch mit externen Kommunikationsschnittstellen außerhalb des Mehrplatzladegeräts 3, z.B. zur Kommunikation des Mehrplatzladegeräts 3 mit externen Computern, Smartphones oder dergleichen. Dabei kann die Befehlsaktivierungseinheit 2 ebenfalls als Kommunikationsschnittstelle der Steuereinheit 11 ausgeführt sein, über die der Benutzer durch mechanisches Berühren oder drahtlos über ein Smartphone oder in anderer Weise die Aktivierung der Anzeigebefehlseinheit 1 auslösen kann.

Wie die gezeigten und die weiteren oben erläuterten Ausführungsbeispiele deutlich machen, stellt die Erfindung in sehr vorteilhafter Weise ein Mehrplatzladegerät und ein entsprechendes Batterie-Mehrplatzladegerät-Set zur Verfügung, die es ermöglichen, die Ladezustände von an Ladeplätzen des Mehrplatzladegeräts aufgenommenen Batterieeinheiten auf Nutzeranforderung hin an den batterieseitigen Anzeigeeinheiten der Batterieeinheiten zur Anzeige zu bringen, ohne dass hierfür eine geräteseitige Anzeigeeinheit benötigt wird und ohne dass die Batterieeinheiten dauerhaft ihren Ladezustand anzeigen müssen und ohne dass der Benutzer entsprechende Betätigungshandlungen an den einzelnen Batterieeinheiten vornehmen muss.

Mit dem Mehrplatzladegerät können insbesondere Akkupacks von elektrisch betriebenen Garten- oder Forstbearbeitungsgeräten oder für elektrisch betriebene Handwerkzeuggeräte bzw. Heimwerkergeräte elektrisch geladen werden, in geeigneten Ausführungen des Mehrplatzladegeräts auch beliebige andere wiederaufladbare Batterieeinheiten.

## Patentansprüche

1. Mehrplatzladegerät mit
- einer Mehrzahl von Ladeplätzen (L₁, L₂, ...), die jeweils zum entnehmbaren Aufnehmen und elektrischen Laden einer wiederaufladbaren Batterieeinheit eingerichtet sind,
- einer Anzeigebefehlseinheit (1) und
- einer nutzerbetätigbaren Befehlsaktivierungseinheit (2), die zur Aktivierung der Anzeigebefehlseinheit (1) eingerichtet ist,
**dadurch gekennzeichnet, dass**
- die Anzeigebefehlseinheit (1) zum Senden eines Ladezustandsanzeigebefehls (B_{A}) eingerichtet ist, der die am jeweiligen Ladeplatz (L₁, L₂, ...) aufgenommene Batterieeinheit zum Anzeigen ihres Ladezustands an einer batterieseitigen Anzeigeeinheit befehligt.

2. Mehrplatzladegerät nach Anspruch 1, weiter **dadurch gekennzeichnet, dass** es dafür eingerichtet ist, in einem aktiven Ladebetriebsmodus einen laufenden Batterieladevorgang beizubehalten, wenn die Anzeigebefehlseinheit (1) den Ladezustandsanzeigebefehl (B_{A}) sendet.

3. Mehrplatzladegerät nach Anspruch 1 oder 2, weiter **gekennzeichnet durch**
- eine Batteriezustandserkennungseinheit (5), die zur Gewinnung einer binären Ladbarkeitsinformation eingerichtet ist, die angibt, ob am jeweiligen Ladeplatz (L₁, L₂, ...) eine ladbare Batterieeinheit aufgenommen ist, und
- eine geräteseitige Anzeigeeinheit (4) mit je einem Anzeigeteil (4₁, 4₂, ...) pro Ladeplatz (L₁, L₂, ...), wobei der jeweilige Anzeigeteil (4₁, 4₂, ...) dafür eingerichtet ist, die Ladbarkeitsinformation von der Batteriezustandserkennungseinheit (5) zu empfangen und diese anzuzeigen.

4. Mehrplatzladegerät nach Anspruch 3, weiter **dadurch gekennzeichnet, dass**
- eine Fehlererkennungseinheit (12) vorgesehen ist, die zur Gewinnung einer Fehlerinformation eingerichtet ist, die eine geräteseitige Fehlfunktion und/oder eine Fehlfunktion einer an einem der Ladeplätze (L₁, L₂, ...) aufgenommenen Batterieeinheit angibt, und
- die geräteseitige Anzeigeeinheit (4) zum Empfangen und Anzeigen der Fehlerinformation eingerichtet ist.

5. Mehrplatzladegerät nach einem der Ansprüche 1 bis 4, weiter **dadurch gekennzeichnet, dass** es zur sequentiellen Durchführung von Batterieladevorgängen an jeweils einem der mehreren Ladeplätze eingerichtet ist.

6. Mehrplatzladegerät nach einem der Ansprüche 1 bis 5, weiter **dadurch gekennzeichnet, dass** die Anzeigebefehlseinheit (1) einen Aktiv-Betriebsmodus, den sie bei Aktivierung einnimmt und in dem sie den Ladezustandsanzeigebefehl (B_{A}) sendet, und einen Standby-Betriebsmodus aufweist, in den sie vom Aktiv-Betriebsmodus selbsttätig wechselt und in dem sie den Ladezustandsanzeigebefehl nicht sendet.

7. Mehrplatzladegerät nach einem der Ansprüche 1 bis 6, weiter **gekennzeichnet durch** eine Energieversorgung für die Anzeigebefehlseinheit (1), wobei diese Energieversorgung eine Meistlade-Erkennungseinheit (8) zur Erkennung einer im Mehrplatzladegerät aufgenommenen Meistlade-Batterieeinheit mit höchstem Ladezustand und eine Zuweisungseinheit (9) umfasst, die der Anzeigebefehlseinheit (1) die erkannte Meistlade-Batterieeinheit zur Versorgung mit elektrischer Energie zuweist.

8. Mehrplatzladegerät nach einem der Ansprüche 3 bis 7, weiter **dadurch gekennzeichnet, dass** es dafür eingerichtet ist, bei Betätigung der Befehlsaktivierungseinheit (2), wenn es sich in einem Standby-Betriebsmodus befindet, einen Geräteinitialisierungsvorgang durchzuführen und ihre Anzeigebefehlseinheit (1) zum Senden des Ladezustandsanzeigebefehls sowie ihre Anzeigeeinheit (4) zum Anzeigen einer Information über den Geräteinitialisierungsvorgang zu aktivieren.

9. Batterie-Mehrplatzladegerät-Set mit
- einem Mehrplatzladegerät (3) nach einem der Ansprüche 1 bis 8 und
- mindestens einer wiederaufladbaren Batterieeinheit (B₁, B₂, ...), die zum elektrischen Laden an einem der Ladeplätze (L₁, L₂, ...) des Mehrplatzladegeräts (3) aufnehmbar ist und eine Befehlsempfangseinheit (6) zum Empfangen des von der Anzeigebefehlseinheit (1) gesendeten Ladezustandsanzeigebefehls (B_{A}) und eine batterieseitige Anzeigeeinheit (7) aufweist, die zum Anzeigen eines Ladezustands der Batterieeinheit (B₁, B₂, ...) eingerichtet ist.

10. Batterie-Mehrplatzladegerät-Set nach Anspruch 9, wobei die Batterieeinheit (B₁, B₂, ...) dafür eingerichtet ist, ihre batterieseitige Anzeigeeinheit (7) zum Anzeigen ihres Ladezustands im Fall, dass die Batterieeinheit an einem der Ladeplätze (L₁, L₂, ...) aufgenommen ist, inaktiv zu halten, wenn sie keinen laufenden Batterieladevorgang erfährt und den Ladezustandsanzeigebefehl (B_{A}) nicht empfängt.

11. Batterie-Mehrplatzladegerät-Set nach Anspruch 9 oder 10 wobei die wiederaufladbare Batterieeinheit (B₁, B₂, ...) ein Akkupack (A₁, A₂, ...) zur elektrischen Energieversorgung eines elektrisch betriebenen Garten- oder Forstbearbeitungsgerätes oder eines elektrisch betriebenen Handwerkzeuggerätes ist.
